(19) Europäisches Patentamt
European Patent Office
Office européen des brevets

(11) **EP 3 055 832 B1**

(12) **FASCICULE DE BREVET EUROPEEN**

(45) Date de publication et mention de la délivrance du brevet:
**31.01.2018 Bulletin 2018/05**

(21) Numéro de dépôt: **14793877.3**

(22) Date de dépôt: **25.09.2014**

(51) Int Cl.:
***G06T 5/50*** *(2006.01)*

(86) Numéro de dépôt international:
**PCT/FR2014/052405**

(87) Numéro de publication internationale:
**WO 2015/052402 (16.04.2015 Gazette 2015/15)**

(54) **PROCÉDÉ DE VISUALISATION D'UNE IMAGE MULTISPECTRALE**

VERFAHREN ZUR BETRACHTUNG EINES MULTISPEKTRALEN BILDES

METHOD FOR VIEWING A MULTI-SPECTRAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2013 FR 1302324**

(43) Date de publication de la demande:
**17.08.2016 Bulletin 2016/33**

(73) Titulaire: **Safran Electronics & Defense**
**92100 Boulogne-Billancourt (FR)**

(72) Inventeurs:
• **AGOSTINI, Eric**
**92100 Boulogne-Billancourt (FR)**
• **THIEBAUT, Maxime**
**92100 Boulogne-Billancourt (FR)**
• **ROUX, Nicolas**
**92100 Boulogne-Billancourt (FR)**
• **FOUBERT, Philippe**
**92100 Boulogne-Billancourt (FR)**
• **TOUATI, Thierry**
**92100 Boulogne-Billancourt (FR)**

(74) Mandataire: **Cabinet Plasseraud**
**66, rue de la Chaussée d'Antin**
**75440 Paris Cedex 09 (FR)**

(56) Documents cités:
**FR-A1- 2 982 393**

• **GOUDAIL F ET AL: "SOME PRACTICAL ISSUES IN ANOMALY DETECTION AND EXPLOITATION OF REGIONS OF INTEREST IN HYPERSPECTRAL IMAGES", APPLIED OPTICS, OPTICAL SOCIETY OF AMERICA, WASHINGTON, DC; US, vol. 45, no. 21, 20 juillet 2006 (2006-07-20), pages 5223-5236, XP001245429, ISSN: 0003-6935, DOI: 10.1364/AO.45.005223 cité dans la demande**

**EP 3 055 832 B1**

**Description**

La présente invention concerne un procédé de visualisation d'une image multispectrale, ainsi qu'un dispositif et un programme d'ordinateur pour mettre en oeuvre un tel procédé.

La surveillance d'un environnement est une tâche courante, notamment pour détecter des intrusions adverses. Une telle surveillance présente des difficultés particulières lorsqu'elle est effectuée dans environnement terrestre. En effet, un environnement terrestre tel qu'un paysage de campagne peut contenir un grand nombre d'éléments distincts aux contours irréguliers tels que des arbres, des buissons, des rochers, des constructions, etc, qui rendent complexes l'interprétation de l'image et la recherche d'éléments intrus. En outre, dans certaines circonstances, telles qu'une surveillance militaire, un élément intrus peut être camouflé pour que sa détection dans le paysage soit plus difficile. De façon courante, un tel camouflage est efficace contre l'observation en lumière visible, notamment pour des longueurs d'onde qui sont entre 0,45 $\mu$m (micromètre) et 0,65 $\mu$m, et tout particulièrement autour de 0,57 $\mu$m qui correspond au maximum de sensibilité de l'oeil humain.

Pour réussir à détecter l'élément intrus, qui est aussi appelé cible dans le jargon de l'Homme du métier, malgré un paysage complexe et un camouflage éventuel de la cible, il est connu d'effectuer une observation multispectrale de l'environnement, comme divulgue par exemple le brevet FR 2 982 393. Une telle observation multispectrale consiste à saisir simultanément plusieurs images du même paysage selon des bandes spectrales différentes, afin qu'une cible qui n'apparaîtrait pas distinctement dans les images saisies selon certaines bandes spectrales soit révélée par les images correspondant à d'autres bandes spectrales. Chaque bande spectrale peut être étroite, avec un intervalle de valeurs de longueur d'onde de quelques dizaines de nanomètres, ou plus large, voire très large avec une largeur de plusieurs micromètres, notamment lorsque la bande spectrale est située dans l'un des domaines infrarouges : entre 3 $\mu$m et 5 $\mu$m ou entre 8 $\mu$m et 12 $\mu$m. Il est ainsi connu qu'une observation dans l'intervalle de longueur d'onde compris entre 0,8 $\mu$m et 1,2 $\mu$m peut être efficace pour révéler une cible dans un environnement de végétation, alors que la cible est camouflée efficacement contre une détection par observation dans l'intervalle de lumière visible pour l'oeil humain.

Toutefois, une telle détection multispectrale peut encore être insuffisante pour permettre à un opérateur qui est en charge de la surveillance de détecter la présence d'une cible dans un environnement terrestre. En effet, dans certaines circonstances, aucune des images qui sont associées séparément aux bandes spectrales ne fait apparaître la cible suffisamment distinctement pour que l'opérateur de surveillance puisse détecter la cible dans ces images, compte tenu du temps d'observation alloué. Dans la suite, chaque image qui correspond séparément à l'une des bandes spectrales est appelée image spectrale. Pour de telles situations, il est encore connu d'améliorer l'efficacité de la détection de cible en présentant à l'opérateur une image qui est construite par projection de Fisher. Un tel procédé est connu notamment de l'article «Some practical issues in anomaly detection and exploitation of regions of interest in hyperspectral images», de F. Goudail et al., Applied Optics, Vol. 45, No. 21, pp. 5223-5236. D'après ce procédé, l'image qui est présentée à l'opérateur est construite en combinant en chaque point de celle-ci, appelé pixel, les valeurs d'intensités qui sont saisies séparément pour plusieurs bandes spectrales, de façon à optimiser un contraste de l'image résultante. Théoriquement, cette construction d'image consiste à projeter pour chaque pixel le vecteur des intensités qui ont été saisies pour les bandes spectrales sélectionnées, sur une direction optimale dans l'espace multidimensionnel des valeurs d'intensités spectrales. Cette direction optimale de projection peut être déterminée à partir de la matrice de covariance des intensités spectrales, estimée sur l'ensemble du champ d'image. Cela revient en fait à rechercher une corrélation maximale entre les variations d'intensités qui sont présentes dans les images différentes saisies selon les bandes spectrales sélectionnées. Le contraste de l'image qui est présentée à l'opérateur est ainsi au moins égal à celui de chaque image spectrale séparée, si bien que la détection de cible par l'opérateur est à la fois plus efficace et plus fiable. Alternativement, la direction optimale de projection peut être recherchée directement en utilisant un algorithme d'optimisation usuel, pour maximiser le contraste d'image en variant la direction de projection dans l'espace multidimensionnel des intensités spectrales.

Or déterminer la direction de la projection de Fisher pour l'ensemble du champ d'image puis l'appliquer à ce même champ d'image entier constitue une quantité de calculs qui est importante, et qui est incompatible avec une exécution en temps réel pendant une mission de surveillance d'environnement. En outre, la durée des calculs est encore augmentée lorsque ceux-ci sont exécutés à l'aide d'un dispositif portable ou mobile, dont la capacité calculatoire est limitée. A cause de cette durée de calcul qui serait trop longue, il est connu de restreindre l'amélioration du contraste par projection de Fisher, à une fenêtre spatiale à l'intérieur de l'image qui est plus petite que l'image entière. La durée de calcul est ainsi réduite grâce à la diminution du nombre des pixels qui sont traités, et redevient compatible avec une exécution en temps réel lors d'une mission de surveillance d'un environnement.

L'opérateur de la surveillance sélectionne la fenêtre à l'intérieur de l'image complète, notamment sa position, en fonction de la nature de l'environnement à cet endroit dans l'image, et de sa volonté d'y accentuer la recherche d'une cible potentielle. Pour faciliter une telle sélection de la position de la fenêtre, et aussi faciliter l'identification et la nature d'une intrusion qui se produirait dans cette zone, il est encore connu de présenter à l'opérateur une image composite sur un écran. Une telle image composite peut-être constituée par l'une des images spectrales en dehors de la fenêtre, et par la portion d'image multispectrale qui résulte de la projection de Fisher à l'intérieur de la fenêtre. Alternativement, plusieurs images spectrales dont les intervalles de longueur d'onde sont contenus dans le domaine de sensibilité de l'oeil humain, peuvent être utilisées pour afficher une représentation du paysage en couleurs naturelles ou presque naturelles en dehors de la fenêtre. L'opérateur peut ainsi se repérer aisément dans l'image, pour placer la fenêtre à l'endroit qu'il souhaite afin que le contenu de l'image multispectrale à cet endroit apparaisse dans la représentation avec un contraste qui est renforcé. Ce contraste renforcé est procuré par la projection de Fisher qui a été réalisée à l'intérieur de la fenêtre.

Dans un tel procédé de visualisation, l'opérateur sélectionne des fenêtres successives à l'intérieur de l'image, et lorsqu'une nouvelle fenêtre est sélectionnée après une fenêtre précédente, le mode initial de représentation de l'image qui est utilisé hors fenêtre est restitué pour les pixels qui étaient situés à l'intérieur de la fenêtre précédente et sont situés maintenant à l'extérieur de la nouvelle fenêtre. Dans ces conditions, l'opérateur peut oublier l'emplacement d'une fenêtre qu'il a sélectionnée antérieurement, notamment s'il a sélectionné ensuite plusieurs autres fenêtres. Il peut aussi oublier le contenu d'image multispectrale qui a été révélé dans une des premières fenêtres sélectionnées. Son exploration de l'image multispectrale par les fenêtres successives devient donc hasardeuse, et il est ainsi possible que l'opérateur n'identifie pas une intrusion adverse dans le paysage seulement parce que, involontairement, il n'aura jamais placé la fenêtre au bon endroit dans l'image complète.

Un but général de l'invention consiste alors à fiabiliser l'exploration de l'image multispectrale à l'aide de fenêtres qui sont sélectionnées successivement par l'opérateur, de façon à réduire le risque qu'un élément intrus ne soit pas décelé. Autrement dit, l'invention a pour but général de réduire encore la probabilité de non-détection d'un élément intrus dans une scène qui est saisie en image multispectrale.

En particulier, l'invention a pour but d'éviter qu'une zone de l'image reste sans que l'opérateur y ait sélectionné une fenêtre, par inadvertance ou en croyant à tort y avoir déjà placé une fenêtre. Pour cela, l'invention vise à laisser une trace dans la représentation de la scène qui est présentée à l'opérateur, des fenêtres qu'il a déjà sélectionnées.

Un but optionnel de l'invention peut consister à laisser une trace dans la représentation de la scène qui est présentée à l'opérateur, de motifs qui ont été révélés à l'intérieur d'une fenêtre puis qui sont redevenus indiscernables lorsqu'une nouvelle fenêtre a été sélectionnée ailleurs dans l'image.

Un but supplémentaire de l'invention est de proposer un procédé amélioré pour visualiser des images multispectrales, qui soit compatible avec la réception en temps réel d'un flux vidéo provenant d'une caméra utilisée pour saisir ces images multispectrales.

Pour atteindre certains de ces buts ou d'autres, un premier aspect de l'invention propose un procédé de visualisation par un opérateur, d'une image multispectrale formée de plusieurs images spectrales d'une même scène qui ont été saisies à un même instant respectivement dans des intervalles spectraux séparés, selon la revendication 1. L'apport de l'invention par rapport aux procédés de visualisation déjà connus réside dans les sous-étapes /7-2/ et /7-3/, avec l'opération de combinaison définie initialement. En effet, une trace des représentations qui résultent des fenêtres antérieures, est conservée dans la représentation de l'image multispectrale qui est nouvellement affichée. Ainsi, la représentation est progressivement enrichie, tout en conservant une visibilité des positions des fenêtres déjà sélectionnées, et des éléments d'image qui ont été révélés possiblement dans ces fenêtres antérieures. Autrement dit, chaque nouvelle représentation n'intervient plus en remplacement des précédentes, mais pour compléter celles-ci. De cette façon, la représentation de la scène qui est montrée à l'opérateur contient une information d'image multispectrale qui est progressivement augmentée, ou enrichie.

L'invention est particulièrement avantageuse lorsque plusieurs ou de nombreuses fenêtres sont sélectionnées successivement. La séquence des étapes /6/ et /7/ est alors répétée avec des fenêtres variables entre deux répétitions successives. A chaque répétition de cette séquence, l'étape /6/ est exécutée à nouveau à partir des mêmes images spectrales déjà sélectionnées, mais pour la nouvelle fenêtre. La représentation de la scène est ensuite remise à jour à l'étape /7/ à partir de la représentation de la scène telle qu'obtenue à l'issue de l'étape /7/ exécutée lors de la répétition précédente, et en utilisant les valeurs d'intensité intermédiaires de l'étape /6/ de la répétition en cours. Les fenêtres successives et les éléments de l'image multispectrale qui ont été éventuellement révélés dans celles-ci, sont conservés dans la représentation actualisée sous forme d'une rémanence. L'opérateur de surveillance continue donc de connaître avec certitude les endroits dans l'image complète auxquels il a déjà sélectionné des fenêtres, ainsi que les motifs qui ont alors été révélés. Le procédé de l'invention possède donc une mise en oeuvre qui est particulièrement simple et intuitive pour l'opérateur, de façon à augmenter l'ergonomie de sa mission de surveillance, et par suite son efficacité et sa fiabilité.

Le bénéfice de l'invention apparaît encore plus lorsque les fenêtres successives ont des recouvrements entre elles qui sont importants et nombreux. En effet, dans certaines circonstances, un élément intrus qui est présent dans la scène n'est révélé que pour une fenêtre qui est située précisément à l'endroit de cet élément dans l'image.

En outre, un ou plusieurs des perfectionnements suivants peuvent être utilisés dans des mises en oeuvre préférées du procédé de l'invention, indépendamment ou en combinaison :

- l'opération de combinaison peut être définie à l'étape /1/ de sorte que la nouvelle valeur d'intensité soit égale à la plus grande des deux valeurs d'intensité qui sont combinées ;

- chaque image spectrale qui est utilisée à l'étape /2/ pour obtenir les valeurs d'intensité initiales, peut correspondre à un intervalle spectral qui est contenu dans un domaine de sensibilité d'un oeil humain. De façon encore plus préférée, plusieurs telles images spectrales peuvent être utilisées, de sorte que la représentation de la scène qui est affichée à l'étape /2/ corresponde à une vision en couleurs de l'oeil humain dans des conditions de jour ;

- les fenêtres qui sont utilisées pour les répétitions successives de la séquence des étapes /6/ et /7/ peuvent être chacune déterminées par l'opérateur qui regarde l'écran ;

- certaines au moins des fenêtres qui sont utilisées pour les répétitions successives de la séquence des étapes /6/ et /7/ peuvent être sélectionnées automatiquement de part et d'autre d'un trajet de déplacement à l'intérieur de la matrice, ce trajet étant déterminé par l'opérateur qui regarde l'écran ;

- certaines des fenêtres qui sont utilisées pour les répétitions successives de la séquence des étapes /6/ et /7/ peuvent être déterminées par l'opérateur, et pour chaque fenêtre déterminée par l'opérateur, la séquence des étapes /6/ et /7/ peut en outre être répétée pour huit fenêtres additionnelles qui sont disposées dans la matrice de sorte que des zones de cible qui sont situées respectivement à l'intérieur des huit fenêtres additionnelles soient contigües par un côté ou par un angle avec une zone de cible dans la fenêtre déterminée par l'opérateur ;

- certaines des fenêtres qui sont utilisées pour les répétitions successives de la séquence des étapes /6/ et /7/ peuvent être déterminées par l'opérateur, et pour chaque fenêtre déterminée par l'opérateur, la séquence des étapes /6/ et /7/ peut en outre être répétée pour quatre fenêtres additionnelles alignées avec la fenêtre déterminée par l'opérateur selon une direction de colonne de la matrice, de façon à former une pile de fenêtres contigües deux à deux et réparties symétriquement de part et d'autre de la fenêtre déterminée par l'opérateur, et de sorte que des zones de cible qui sont situées respectivement à l'intérieur des fenêtres de la pile soient contigües deux à deux ;

- une partie des pixels dans la fenêtre qui est utilisée pour la répétition en cours de la séquence des étapes /6/ et /7/, peut être marquée en réponse à une première commande saisie par l'opérateur. Dans ce cas, les pixels marqués peuvent être affichés avec une couleur prédéterminée. Eventuellement, ces pixels marqués peuvent être ceux des pixels contenus dans la fenêtre qui est utilisée pour répétition en cours de la séquence des étapes /6/ et /7/, qui ont des valeurs d'intensité supérieures à un premier seuil dans la représentation de la scène telle que mise à jour à l'issue de la répétition en cours de la séquence des étapes /6/ et /7/ ;

- la représentation de la scène qui est affichée à l'étape /2/, avec les valeurs d'intensité initiales, peut être de nouveau affichée en réponse à une seconde commande saisie par l'opérateur, puis le procédé de visualisation peut être repris à partir de l'étape /3/. Lors d'une telle réinitialisation de la représentation, un marquage de pixels qui aurait été déclenché par l'opérateur par une première commande saisie antérieurement à la seconde commande, peut être conservé ; et

- à l'étape /5/ et à la sous-étape /7-1/, la valeur d'intensité initiale peut être remplacée par la valeur d'intensité intermédiaire que si cette dernière est supérieure à un second seuil adopté pour la fenêtre en cours, sinon la valeur d'intensité initiale peut être maintenue mais en étant affectée par un niveau de transparence qui est déterminé en fonction de la valeur d'intensité intermédiaire. De même, à la sous-étape /7-2/, la nouvelle valeur d'intensité résultant de la combinaison peut aussi n'être utilisée pour le remplacement que si elle est supérieure au second seuil, sinon la valeur d'intensité qui résulte de la répétition précédente de la séquence des étapes /6/ et /7/ peut être maintenue mais en étant affectée par un niveau de transparence qui est déterminé en fonction de la nouvelle valeur d'intensité. Possiblement, le second seuil peut être déterminé à partir d'une évaluation statistique des valeurs d'intensité intermédiaires pour les pixels appartenant à une zone de fond dans la fenêtre qui est utilisée pour la répétition en cours de la séquence des étapes /6/ et /7/.

Les fenêtres qui sont éventuellement ajoutées par rapport à la sélection qui est réalisée par l'opérateur lui-même, ont pour but de produire un balayage plus complet de la scène. Ainsi, le procédé de visualisation devient encore plus robuste par rapport à des zones de l'image qui pourraient avoir été omises pour y sélectionner des fenêtres.

Un second aspect de l'invention concerne un dispositif de visualisation d'image multispectrale , qui comprend :

- des moyens de stockage de l'image multispectrale ;

- un écran comprenant une matrice de pixels ;

- un système de traitement d'image, qui est adapté pour combiner entre elles des valeurs d'intensité attribuées aux pixels dans chaque image spectrale ;

- un système de contrôle, qui est adapté pour afficher sur l'écran une représentation de la scène produite par le système de traitement d'image ; et

- un système de sélection d'une fenêtre dans la matrice, la fenêtre sélectionnée étant plus petite que la matrice.

Un tel dispositif est adapté pour mettre en oeuvre un procédé de visualisation qui est conforme au premier aspect de l'invention. Le système de traitement d'image et le système de contrôle peuvent avantageusement être constitués par un processeur graphique, désigné par GPU, ou bien par un circuit logique programmable, tel que désigné par FPGA.

Enfin, un troisième aspect de l'invention concerne un programme d'ordinateur, qui comprend des instructions de programme stockées sur un support lisible par un ou plusieurs processeurs, et adaptées pour faire exécuter à ce ou ces processeurs un procédé de visualisation conforme au premier aspect de l'invention.

D'autres particularités et avantages de la présente invention apparaîtront dans la description ci-après d'exemples de mise en oeuvre non limitatifs, en référence aux dessins annexés, dans lesquels :

- la figure 1 est une représentation schématique d'une image multispectrale ;

- la figure 2a représente un écran d'affichage utilisé pour mettre en oeuvre l'invention, et les figures 2b à 2d montrent des fenêtres qui sont sélectionnées selon trois types de séquences préférés ;

- la figure 3 représente un masque qui peut être utilisé pour calculer le contraste à l'intérieur d'une fenêtre, dans des modes particuliers de mise en oeuvre de l'invention ;

- la figure 4 montre le principe d'une projection de Fisher dans l'espace des intensités spectrales ;

- la figure 5a est un diagramme synoptique des étapes d'un procédé conforme à l'invention ; et

- la figure 5b montre en détail une étape du procédé de la figure 5a.

Pour raison de clarté, les dimensions des éléments qui sont représentés dans certaines de ces figures ne correspondent ni à des dimensions réelles ni à des rapports de dimensions réels. En outre, des références identiques qui sont indiquées dans des figures différentes désignent des éléments identiques ou qui ont des fonctions identiques.

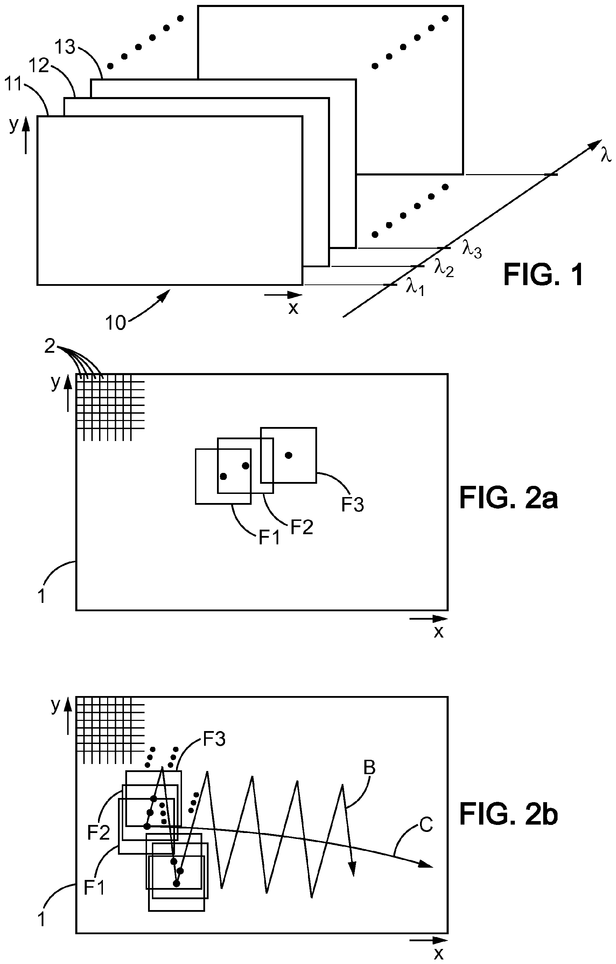

La référence 10 dans la figure 1 désigne globalement une image multispectrale formée de plusieurs images individuelles 11, 12, 13,... qui ont été saisies simultanément pour une même scène. Autrement dit, les images individuelles 11, 12, 13,... ont été saisies par des voies d'imagerie disposées en parallèle, activées en même temps et ayant le même champ optique d'entrée. Toutefois, chaque image 11, 12, 13,... a été saisie en sélectionnant une partie du rayonnement issu de la scène, qui est séparée de chaque partie du rayonnement utilisée pour une autre des images 11, 12, 13,... Cette séparation est réalisée en fonction de la longueur d'onde $\lambda$ du rayonnement, d'une des façons connues de l'Homme du métier, si bien que chacune des images 11, 12, 13,..., appelée image spectrale, a été saisie avec le rayonnement dont la longueur d'onde appartient à un intervalle distinct, de préférence sans recouvrement avec chacun des intervalles des autres images spectrales. Le nombre des images spectrales 11, 12, 13,... peut être quelconque, par exemple égal à vingt images spectrales, chacune associée à un intervalle de longueur d'onde dont la largeur peut être comprise entre quelques nanomètres et quelques dizaines de nanomètres, ou plus. Une telle image multispectrale peut aussi être dite hyperspectrale, en fonction du nombre des images spectrales qui la composent et de la largeur de chacun des intervalles de longueur d'onde de celles-ci. Par exemple, $\lambda_1$, $\lambda_2$, $\lambda_3$,... désignent des valeurs centrales pour les intervalles de longueur d'onde respectifs des images spectrales 11, 12, 13,... En fonction de l'application de l'invention, ces intervalles peuvent être compris entre 400 nm (nanomètre) et 1 $\mu$m (micromètre), ou entre 400 nm et 2,5 $\mu$m, par exemple.

Chaque image spectrale 11, 12, 13,... peut être traitée pour l'invention à partir d'un fichier qui est lu sur un support de stockage, ou à partir d'un flux numérique qui est produit par un instrument de prise de vues à une cadence vidéo. Selon le cas, les données d'images peuvent être des données brutes produites par le capteur, ou des données déjà traitées pour certaines opérations telles que le recadrage des images spectrales les unes par rapport aux autres, une correction de sur- ou sous-exposition, etc.

La figure 2a montre un écran de visualisation de l'image multispectrale 10. Il comprend une matrice 1 de points d'image 2, ou pixels 2, qui sont disposés aux intersections de lignes et de colonnes de la matrice. Par exemple, la matrice 1 peut comporter 500 colonnes et 500 lignes de pixels 2. x et y désignent respectivement la direction des lignes et celle des colonnes.

L'image multispectrale 10 est présentée à un opérateur, sur la matrice d'écran 1 de la façon qui est décrite maintenant.

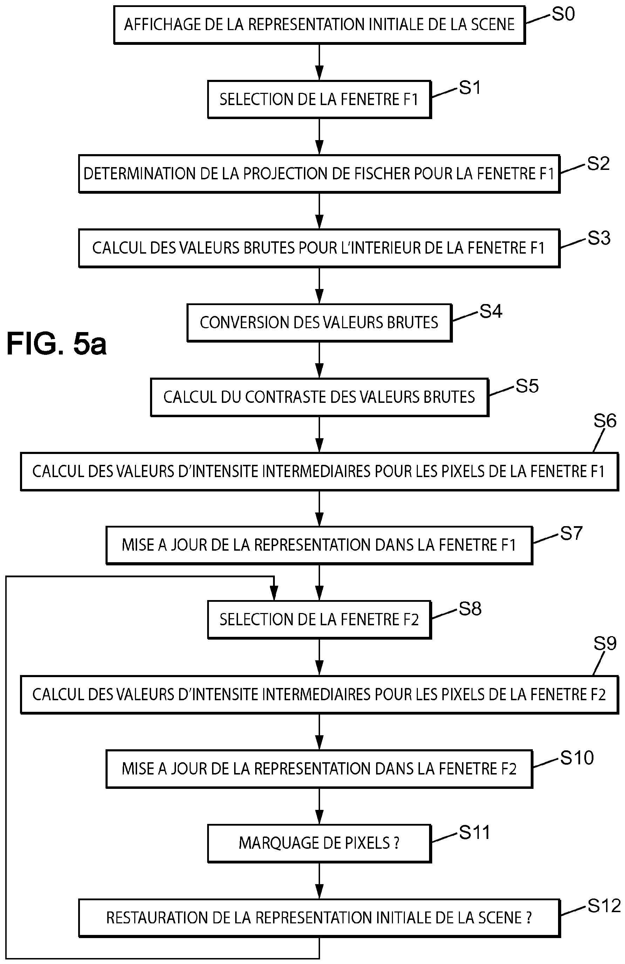

Tout d'abord, une représentation initiale de la scène est affichée sur la matrice 1, qui peut être l'une des images spectrales correspondant à un intervalle de longueur d'onde contenu dans le domaine visible de l'oeil humain, ou à un intervalle qui est situé dans le domaine infrarouge. Eventuellement, plusieurs images spectrales dans le domaine visible peuvent être superposées, de sorte que la représentation initiale restitue une perception de couleurs naturelles en condition de jour. Alternativement encore, la représentation initiale peut être une combinaison linéaire de plusieurs des images spectrales, en utilisant une formule de combinaison linéaire qui est fixe. L'affichage de cette représentation initiale est l'étape S0 de la figure 5a.

A l'étape S1, une fenêtre F1 est sélectionnée dans la matrice 1, de dimensions inférieures à cette dernière. Par exemple, la fenêtre F1 peut être carrée et s'étendre sur 51 pixels dans les deux directions x et y. L'image multispectrale 10 est alors affichée sur la matrice 1 de façon différente à l'intérieur de la fenêtre F1 et à l'extérieur de celle-ci, pour obtenir un compromis entre un repérage dans l'image qui soit facilité pour l'opérateur, une détection par l'opérateur qui soit la plus efficace possible, d'éléments intrus présents dans la scène qui est imagée, un confort de visualisation qui soit amélioré, et une présentation d'images multispectrales successives qui puisse être réalisée en temps réel par rapport à la saisie ou la lecture des images.

La position de la fenêtre F1 dans la matrice 1 peut être sélectionnée par l'opérateur, par exemple en désignant un point central de cette fenêtre à l'aide d'une souris. Dans ce cas, les dimensions de la fenêtre peuvent avoir été fixées initialement, par exemple en fonction d'une hypothèse sur la taille de l'élément intrus qui est recherché dans la scène, et sa distance d'éloignement supposée. Préférablement, toutes les fenêtres qui seront utilisées successivement dans une même mise en oeuvre de l'invention auront des dimensions identiques.

La représentation initiale de l'image multispectrale 10 sur la matrice 1 est conservée en dehors de la fenêtre F1, pour faciliter le repérage de l'opérateur dans la scène.

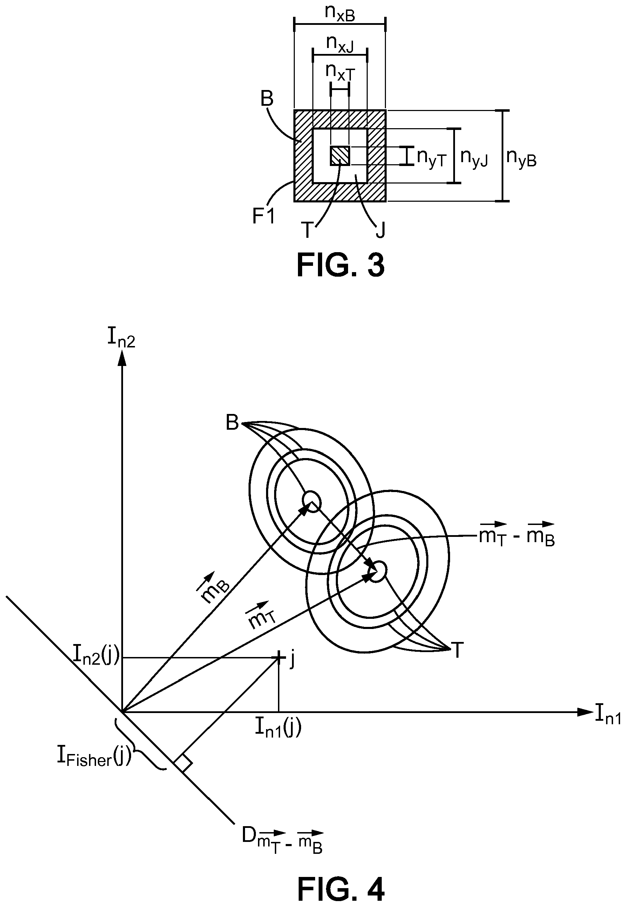

Le mode d'affichage qui est utilisé pour l'image multispectrale 10 à l'intérieur de la fenêtre F1 privilégie l'efficacité de détection d'éléments intrus à cet endroit de la scène, en réalisant un décamouflage. Pour cela, un contraste maximal est recherché entre des contenus d'image multispectrale qui sont situés dans deux zones séparées de la fenêtre F1 : une zone de cible et une zone de fond. Par exemple, comme représenté dans la figure 3, la zone de cible notée T et la zone de fond notée B peuvent avoir des limites respectives carrées, être concentriques et séparées par une zone intermédiaire notée J. $n_{xB}$ et $n_{yB}$ désignent les dimensions externes de la zone de fond B selon les directions x et y. Elles correspondent aux dimensions de la fenêtre F1, par exemple chacune égale à 51 pixels. $n_{xT}$ et $n_{yT}$ désignent les dimensions de la zone de cible T selon les directions x et y, par exemple chacune égale à 7 pixels, et $n_{xJ}$ et $n_{yJ}$ désignent les dimensions externes de la zone intermédiaire J, par exemple chacune égale à 31 pixels. Comme pour $n_{xB}$ et $n_{yB}$, les valeurs de $n_{xT}$, $n_{yT}$, $n_{xJ}$ et $n_{yJ}$ peuvent être sélectionnées en fonction de l'hypothèse sur la taille de l'élément intrus qui est recherché dans la scène, et sa distance d'éloignement supposée.

La méthode d'optimisation du contraste entre la zone de cible T et la zone de fond B, à l'intérieur de la fenêtre F1, qui est maintenant décrite est connue sous l'appellation méthode par projection de Fisher. Elle comprend la détermination de la projection de Fisher elle-même (étape S2 de la figure 5a) et son application au contenu de l'image multispectrale 10 dans la fenêtre F1 (étape S3). Les résultats des projections de Fisher relatifs à des fenêtres différentes sont ensuite ramenés à une échelle commune, pour pouvoir être comparés entre eux.

Plusieurs des images spectrales 11, 12, 13,... sont sélectionnées pour afficher la portion de l'image multispectrale 10 qui est contenue dans la fenêtre F1. k désigne le nombre des images spectrales de cette sélection, et est supérieur ou égal à deux. Cette sélection d'images spectrales est constante pour chaque mise en oeuvre de l'invention, mais peut être variée pour des mises en oeuvre successives à partir de la même image multispectrale 10. Elle peut ne comprendre qu'un nombre réduit des images spectrales 11, 12, 13,... qui composent l'image multispectrale 10, ou toutes. Eventuellement, cette sélection peut comprendre une ou plusieurs des images spectrales dont les intervalles de longueur d'onde sont contenus dans le domaine visible de l'oeil humain, même si celles-ci ont déjà été utilisées pour la représentation initiale.

Les valeurs d'intensités de chaque pixel 2 de la zone de cible T et de la zone de fond B, dans la fenêtre F1, sont utilisées pour les k images spectrales sélectionnées. Un vecteur d'intensités spectrales est alors construit pour la zone de cible T de la façon suivante : il possède une coordonnée séparée pour chacune des images spectrales sélectionnées, et cette coordonnée est égale à une moyenne des valeurs d'intensité de tous les pixels de la zone de cible T dans cette image spectrale. Ainsi, le vecteur suivant peut être construit :

$$\vec{m}_T = \frac{1}{N_T} \begin{bmatrix} \sum_{i \in T} I_{n1}(i) \\ \sum_{i \in T} I_{n2}(i) \\ \vdots \\ \sum_{i \in T} I_{nk}(i) \end{bmatrix}$$

où i est un indice qui numérote les pixels de la zone de cible T, n1, n2,..., nk sont des valeurs d'un indice entier qui identifie les k images spectrales sélectionnées, et $I_{n1}(i)$, $I_{n2}(i)$,..., $I_{nk}(i)$ sont les valeurs d'intensités du pixel i respectivement dans les images spectrales n1, n2,..., nk. $N_T$ est un coefficient de division du vecteur, qui peut être égal au nombre de pixels de la zone de cible T, ou qui peut être sélectionné de sorte que le vecteur possède une valeur de norme égale à l'unité. Dans un espace des intensités pour les k images spectrales sélectionnées, le vecteur $\mathbf{m}_T$ correspond à une position moyenne des vecteurs d'intensités spectrales de tous les pixels de la zone de cible T. D'autres modes de calcul de valeur moyenne peuvent être utilisés alternativement, par exemple avec des coefficients de pondération. Un autre vecteur d'intensités spectrales est construit de façon analogue pour la zone de fond B :

$$\vec{m}_B = \frac{1}{N_B} \begin{bmatrix} \sum_{i \in B} I_{n1}(i) \\ \sum_{i \in B} I_{n2}(i) \\ \vdots \\ \sum_{i \in B} I_{nk}(i) \end{bmatrix}$$

où le coefficient de division $N_B$ est calculé de la même façon que le coefficient $N_T$, mais en remplaçant les pixels de la zone de cible T par ceux de la zone de fond B, en nombre différent dans la plupart des mises en oeuvre de l'invention, mais pas nécessairement. Le vecteur $\mathbf{m}_B$ correspond de la même façon à une position moyenne des vecteurs d'intensités spectrales de tous les pixels de la zone de fond B. Les vecteurs $\mathbf{m}_T$ et $\mathbf{m}_B$ sont disposés en colonne et ont chacun k coordonnées.

On construit aussi la matrice des covariances suivante à partir des valeurs d'intensités des pixels 2 de la zone de fond B :

$$\text{Co var}_B = \begin{bmatrix} \text{Var}(I_{n1}, I_{n1}) & \text{Co var}(I_{n2}, I_{n1}) & \cdots & \text{Co var}(I_{nk}, I_{n1}) \\ \text{Co var}(I_{n1}, I_{n2}) & \text{Var}(I_{n2}, I_{n2}) & \cdots & \text{Co var}(I_{nk}, I_{n2}) \\ \vdots & \vdots & \ddots & \vdots \\ \text{Co var}(I_{n1}, I_{nk}) & \text{Co var}(I_{n2}, I_{nk}) & \cdots & \text{Var}(I_{nk}, I_{nk}) \end{bmatrix}$$

où $\text{Var}(I_{n1}, I_{n1})$ désigne la variance des valeurs d'intensité de l'image spectrale n1 calculée sur les pixels de la zone de fond B, $\text{Covar}(I_{n1}, I_{n2})$ désigne la covariance des valeurs d'intensités respectives des images spectrales n1 et n2 calculée sur les pixels de la zone de fond B, etc pour toutes les paires de valeurs d'indice sélectionnées parmi n1, n2,...nk. La matrice $\text{Covar}_B$ est carrée de dimension k.

La projection de Fisher $P_{Fisher}$ est alors déterminée de la façon suivante :

$$P_{Fisher} = (\vec{m}_T - \vec{m}_B)^t \cdot \text{Co var}_B^{-1}$$

où l'exposant t désigne la transposée d'un vecteur, l'exposant -1 désigne l'inverse d'une matrice, et désigne l'opération de produit matriciel, ici appliquée entre le vecteur en ligne $(\mathbf{m}_T - \mathbf{m}_B)^t$ et la matrice $\text{Covar}_B^{-1}$. La projection de Fisher ainsi exprimée est un vecteur en ligne à k coordonnées. Elle est appliquée au vecteur des valeurs d'intensités spectrales de chaque pixel de la fenêtre F1 sous la forme du produit matriciel suivant :

$$I_{\text{Fisher}}(j) = P_{\text{Fisher}} \cdot \begin{bmatrix} I_{n1}(j) \\ I_{n2}(j) \\ \vdots \\ I_{nk}(j) \end{bmatrix}$$

où j désigne un pixel quelconque dans la fenêtre F1, et $I_{\text{Fisher}}(j)$ est la valeur d'intensité pour le pixel j qui résulte de la projection de Fisher appliquée au vecteur des valeurs d'intensités pour ce même pixel j dans les k images spectrales de la sélection. Dans le jargon de l'Homme du métier, la projection $P_{\text{Fisher}}$ qui est déterminée pour la fenêtre sélectionnée est appelée facteur de Fisher, et l'ensemble des valeurs d'intensité $I_{\text{Fisher}}(j)$ qui est obtenu pour tous les pixels j de la fenêtre est appelé matrice de Fisher. La figure 4 illustre cette projection de Fisher dans l'espace des intensités spectrales, pour le cas de deux images spectrales qui sont sélectionnées : k=2. Les notations qui ont été introduites ci-dessus sont reprises dans cette figure. Les ellipses concentriques qui sont référencées T et B symbolisent des courbes de niveaux associées à des valeurs constantes pour des nombres de pixels dans la zone de cible T et dans la zone de fond B. L'intensité projetée $I_{\text{Fisher}}(j)$ a été appelée valeur brute de projection dans la description générale de l'invention, ou aussi plus simplement valeur brute. $D_{mT\text{-}mB}$ est la direction sur laquelle sont projetés les vecteurs d'intensités spectrales des pixels, selon le procédé de Fisher.

Ces valeurs brutes sont alors converties à l'étape S4, pour ajuster l'amplitude de leurs variations dans la fenêtre F1. Par exemple, une transformation affine de ces valeurs brutes peut être déterminée puis appliquée, de sorte que la plus petite des valeurs brutes devienne égale à la limite inférieure d'un intervalle prédéterminé, et la plus grande des mêmes valeurs brutes devienne égale à la limite supérieure du même intervalle. Cet intervalle fixe ainsi la dynamique de variation des valeurs brutes converties. Par exemple, les valeurs brutes converties de cette façon peuvent être réparties entre 0 et 255, en étant arrondies à des valeurs entières.

Un contraste C est ensuite calculé à l'étape S5, pour les valeurs brutes $I_{\text{Fisher}}(j)$ à l'intérieur de la fenêtre F1. Ce contraste peut être calculé de la façon suivante, pour évaluer la différence de rendu des valeurs brutes entre la zone de cible T et la zone de fond B :

$$C = \frac{\left| \dfrac{1}{N_T} \sum_{j \in T} I_{\text{Fisher}}(j) - \dfrac{1}{N_B} \sum_{j \in B} I_{\text{Fisher}}(j) \right|}{\sigma_{j \in B}(I_{\text{Fisher}}(j))}$$

où | . | désigne la valeur absolue et $\sigma_{j \in B}$ désigne l'écart-type calculé sur les pixels de la zone de fond B.

Une valeur d'intensité intermédiaire est alors calculée à l'étape S6 pour chaque pixel 2 de la fenêtre F1, en multipliant la valeur d'intensité brute puis convertie de ce pixel par la valeur du contraste C. Des valeurs d'intensité intermédiaires qui sont obtenues de cette façon pour un même pixel 2 de la matrice 1 mais pour des fenêtres différentes qui contiennent ce pixel, peuvent alors être comparées significativement.

L'affichage de l'image multispectrale 10 sur la matrice 1 est alors actualisé à l'étape S7, sous forme d'une représentation mixte de la scène. L'affichage en dehors de la fenêtre F1 est maintenu selon la représentation initiale décrite plus haut, par exemple avec des couleurs qui reproduisent la vision naturelle en conditions de jour. A l'intérieur de la fenêtre F1, l'affichage est actualisé pour chaque pixel conformément à la valeur d'intensité intermédiaire qui a été obtenue pour ce pixel et pour la fenêtre F1. La représentation de la scène qui est présentée à l'opérateur devient donc composite, ou hétérogène, quant aux modes d'affichage qui sont utilisés en dehors et à l'intérieur de la fenêtre F1. Le mode d'affichage par projection de Fisher qui est utilisé dans la fenêtre F1 permet de révéler des éléments intrus qui sont présents dans la scène qui est imagée, à l'endroit de la fenêtre.

Selon un perfectionnement de l'invention, la représentation de la scène peut être actualisée différemment dans la fenêtre F1 selon que la valeur d'intensité intermédiaire d'un pixel est supérieure ou égale à un seuil calculé pour cette fenêtre, ou au contraire inférieure à ce seuil. Un tel seuil peut être une fraction fixe, par exemple un quart, d'une valeur moyenne des valeurs d'intensité intermédiaires dans la fenêtre F1. Un tel seuil a été appelé second seuil dans la description générale de l'invention. Si la valeur d'intensité intermédiaire d'un pixel est supérieure ou égale au second seuil, alors elle est utilisée pour remplacer la valeur d'intensité du même pixel dans la représentation initiale, comme déjà indiqué. Dans le cas contraire, selon le perfectionnement présent, elle est utilisée pour appliquer un niveau d'éclaircissement au pixel tel qu'affiché dans la représentation initiale. Ce niveau d'éclaircissement peut être déterminé en fonction de la valeur d'intensité intermédiaire, par exemple en utilisant une table de correspondance entre des valeurs d'intensité intermédiaires et des valeurs d'éclaircissement. De telles valeurs d'éclaircissement peuvent correspondre au canal alpha d'affichage d'un pixel. Ainsi, la représentation de la scène peut être éclaircie en la plupart des points de la fenêtre F1, si bien que l'opérateur voit encore plus sur l'écran une trace de cette fenêtre en superposition avec la représentation initiale. Mais cette représentation initiale est encore visible dans une partie au moins de la fenêtre F1, de sorte que l'opérateur puisse encore discerner des contours de motifs de la scène à l'intérieur de cette fenêtre. Ainsi, la capacité de l'opérateur à interpréter visuellement la représentation de la scène est aussi partiellement conservée à l'intérieur la fenêtre F1.

Une autre fenêtre, notée F2 dans les figures, est ensuite sélectionnée à la place de la fenêtre F1, à l'étape S8. Les fenêtres F1 et F2 ont de préférence des dimensions identiques, mais pas nécessairement. Lorsque leurs dimensions sont identiques, chaque fenêtre peut être sélectionnée par la position de son point central dans la matrice 1, comme montré dans la figure 2a. Le masque de calcul du contraste qui est utilisé dans la fenêtre F2 peut être identique à celui utilisé dans la fenêtre F1, comprenant la zone de cible T, la zone intermédiaire J et la zone de fond B. F3 désigne encore une autre fenêtre sélectionnée ultérieurement, après la fenêtre F2.

D'une façon simple, la position de chaque fenêtre peut être sélectionnée manuellement par l'opérateur dans la matrice 1 (figure 2a).

Alternativement, l'opérateur peut désigner un chemin de déplacement dans la matrice 1, et un module informatique peut déterminer des fenêtres successives dont les centres sont situés sur une trace en zigzags ou en méandres, qui est répartie de part et d'autre du chemin de déplacement. Le chemin de déplacement peut être lui-même rectiligne, mais est courbe en général. Les références C et B dans la figure 2b désignent respectivement le chemin de déplacement qui est désigné par l'opérateur, et la trace en zigzags des centres de fenêtres successifs.

Eventuellement, l'opérateur peut désigner directement par lui-même les fenêtres successives de sorte que leurs centres respectifs soient situés sur une trace en zigzag ou en méandres, possiblement avec des allers-retours de la trace sur elle-même.

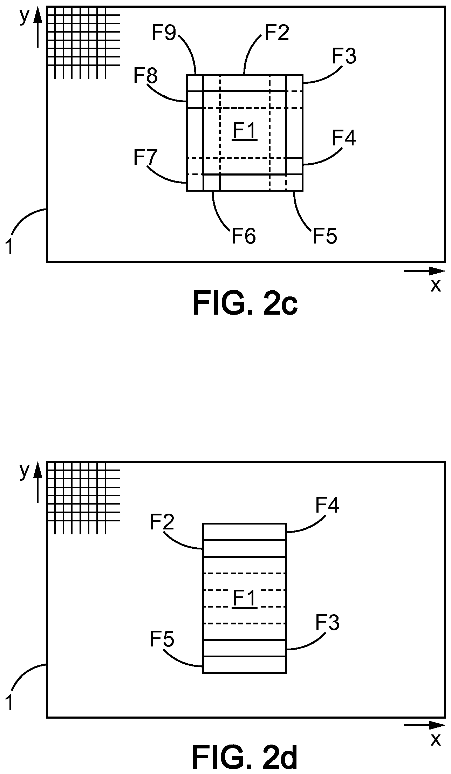

Alternativement encore, la fenêtre F2 et plusieurs fenêtres ultérieures peuvent être sélectionnées automatiquement à partir de la fenêtre F1. Par exemple, conformément à la figure 2c, les fenêtres successives F2 à F9 sont décalées autour de la fenêtre F1 de sorte que les zones de cible T à l'intérieur de chacune des fenêtres F2 à F9 soient contiguës avec la zone de cible T dans la fenêtre F1 par un côté ou par un angle. Selon encore une autre possibilité, quatre fenêtres peuvent être sélectionnées automatiquement après la fenêtre F1, qui forment une pile autour de celle-ci selon la direction y, comme représenté sur la figure 2d. Dans ce cas, les fenêtres F2 à F5 sont décalées selon la direction y de sorte que les zones de cible T qui sont associées respectivement à chacune de ces fenêtres, soient contiguës deux à deux par les côtés des zones de cible qui sont parallèles à la direction x.

Des valeurs d'intensité intermédiaires sont alors calculées pour chaque pixel de la fenêtre F2, à l'étape S9, de la même façon que pour la fenêtre F1 aux étapes S2 à S6.

L'invention trouve utilité lorsque certaines fenêtres qui sont sélectionnées les unes après les autres se recouvrent entre elles, sans que deux fenêtres avec recouvrement soient nécessairement successives dans l'ordre chronologique de sélection des fenêtres.

La représentation qui est déjà affichée sur la matrice 1 n'est pas modifiée pour les pixels qui n'appartiennent pas à la fenêtre F2.

Le traitement des pixels qui appartiennent à la fenêtre F2 est différent selon que ceux-ci ont déjà appartenu à la fenêtre F1 ou non. Si un pixel de la fenêtre F2 n'appartenait pas à la fenêtre F1, sa valeur d'intensité est mise à jour comme déjà décrit plus haut pour la fenêtre F1, mais avec la valeur d'intensité intermédiaire qui a été calculée pour ce pixel et pour la fenêtre F2. Dans le cas opposé où un pixel est commun aux deux fenêtres F1 et F2, sa valeur d'intensité est actualisée de la façon qui est décrite maintenant. La valeur d'intensité intermédiaire qui a été calculée pour ce pixel dans le cadre du traitement de la fenêtre F2 est combinée avec la valeur d'intensité intermédiaire qui a été calculée pour le même pixel dans le cadre du traitement de la fenêtre F1, en appliquant une opération de combinaison de valeurs d'intensité qui a été définie préalablement. Puis, le résultat de la combinaison est utilisé à l'étape S10 pour la représentation de la scène mise à jour et présentée à l'opérateur.

Dans des mises en oeuvre préférées de l'invention, l'opération de combinaison peut consister à sélectionner la plus grande des deux valeurs d'intensité intermédiaires. Ainsi, si la valeur d'intensité intermédiaire d'un pixel commun aux fenêtres F1 et F2, telle qu'elle résulte du traitement de la fenêtre F2, est plus grande que la valeur d'intensité intermédiaire qui a résulté du traitement de la fenêtre F1, alors la valeur nouvellement obtenue est utilisée pour l'affichage mis à jour. Sinon, la valeur déjà utilisée dans l'affichage en cours pour ce pixel est maintenue.

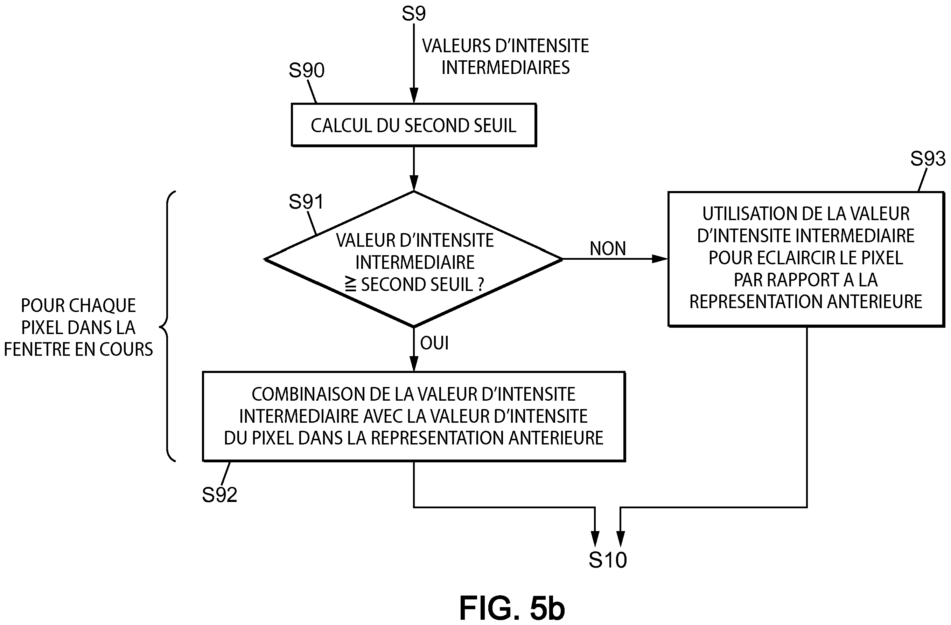

Le perfectionnement consistant à prendre en compte la valeur d'intensité intermédiaire sous la forme d'un éclaircissement de la valeur d'intensité qui est utilisée dans la représentation en cours jusqu'à présent, lorsque cette valeur d'intensité intermédiaire est inférieure au second seuil, peut être repris pour le traitement de la fenêtre F2. La figure 5b illustre ce perfectionnement. Tout d'abord, la valeur du second seuil est actualisée en la recalculant pour la fenêtre F2, de la même façon qu'indiqué précédemment pour la fenêtre F1 (étape S90). Alors, lorsqu'un pixel de la fenêtre F2 possède une valeur d'intensité intermédiaire qui est inférieure à la valeur recalculée du second seuil, la valeur d'intensité intermédiaire peut être utilisée sous forme d'un niveau d'éclaircissement qui est appliqué à la valeur d'intensité antérieure du même pixel (étapes S91 et S93). Cet éclaircissement est appliqué aussi bien si la valeur d'intensité antérieure était déjà une valeur d'intensité intermédiaire, ou si elle était une valeur d'intensité conservée depuis la représentation initiale. L'étape S92 correspond au cas où la nouvelle valeur d'intensité intermédiaire est supérieure ou égale au second seuil. Son déroulement est identique à celui qui est mis en oeuvre sans le perfectionnent d'éclaircissement pour les valeurs d'intensité intermédiaires qui sont faibles.

La séquence des étapes S8 à S10 est répétée chaque fois qu'une nouvelle fenêtre est sélectionnée. Les méthodes de sélection de fenêtres qui ont été décrites en référence aux figures 2a à 2d peuvent être reprises pour chaque nouvelle fenêtre.

L'invention fait apparaître progressivement des éléments avec un contraste qui est augmenté, dans la représentation de la scène qui est présentée à l'opérateur, au fur et à mesure que des fenêtres supplémentaires sont utilisées. Cette augmentation du contraste est récupérée de l'information qui est contenue dans l'image multispectrale au-delà de la représentation qui est affichée à un instant donné. En outre, les éléments de la scène qui sont ainsi mis en évidence à un instant sont maintenus ensuite dans les mises à jour successives de la représentation.

Simultanément, la représentation en cours fait aussi apparaître les fenêtres qui ont été sélectionnées antérieurement, afin d'assister l'opérateur dans sa surveillance par balayage progressif de la scène. Les fenêtres déjà sélectionnées forment des zones plus claires dans la représentation qui est affichée, et les éléments qui ont été révélés par projection de Fisher apparaissent dans ces zones de façon encore plus vive. Autrement dit, la représentation de la scène possède une rémanence des éléments révélés dans l'une quelconque des fenêtres antérieures, ainsi qu'une rémanence des positions de toutes les fenêtres antérieures.

Un avantage de l'invention réside dans le fait qu'aucun historique des actualisations successives de la représentation n'est mémorisé de façon indispensable. Une nouvelle actualisation peut être construite seulement à partir de la précédente et du résultat de la projection de Fisher dans la dernière fenêtre sélectionnée.

Optionnellement, certains des pixels dans la fenêtre en cours peuvent être marqués (étape S11 de la figure 5a). Un tel marquage est réalisé en réponse à une commande spéciale saisie par l'opérateur, appelée première commande dans la description générale de l'invention. Il permet de faire apparaître de façon encore plus apparente, et éventuellement de façon permanente dans les représentations successives qui sont affichées, les pixels dont l'intensité est importante. Par exemple, ces pixels peuvent être affichés avec une couleur saturée prédéterminée. Les pixels de la fenêtre en cours qui sont ainsi marqués peuvent être ceux qui ont une intensité d'affichage supérieure à un seuil, dit premier seuil dans la description générale de l'invention. Ce premier seuil peut être fixé a priori, ou bien peut être déterminé en fonction de la distribution des valeurs d'intensité intermédiaires dans la fenêtre en cours. Alternativement, le marquage peut être limité à ceux des pixels dont l'intensité résulte ou a résulté au moins une fois de l'application de l'opération de combinaison, pour indiquer que ceux-ci ont été décamouflés par projection de Fisher.

Optionnellement aussi, la représentation qui est affichée sur l'écran peut être réinitialisée à la suite d'une seconde commande saisie par l'opérateur (étape S12). La représentation initiale est alors affichée à nouveau et le procédé de l'invention est repris à partir de cette représentation initiale restaurée, mais pour la fenêtre qui est sélectionnée maintenant. Une telle réinitialisation permet d'effacer les rémanences des fenêtres antérieures et des éléments de la scène qui ont été décamouflés dans certaines de celles-ci, lorsque la représentation actualisée est devenue surchargée et confuse. Avantageusement, les pixels qui ont été marqués volontairement par l'opérateur au moyen d'une première commande, peuvent rester marqués lors de la réinitialisation.

Il est entendu que l'invention peut être mise en oeuvre en modifiant plusieurs aspects des modes de réalisation qui ont été décrits en détail ci-dessus.

En particulier, l'opération de combinaison qui est utilisée pour actualiser la valeur d'intensité d'un pixel, peut être autre que le choix de la plus grande entre les deux valeurs d'intensité qui sont comparées. Par exemple, la nouvelle valeur de combinaison peut être une fonction de l'écart-type des valeurs d'intensité du pixel concerné dans les représentations successives, ou seulement certaines d'entre elles, notamment celles pour lesquelles le pixel est à l'intérieur des fenêtres qui ont été sélectionnées pour ces représentations. Une telle utilisation de l'écart-type permet en effet de faire apparaître des éléments de la scène qui sont décamouflés seulement lorsque la fenêtre qui est sélectionnée est placée à l'endroit de ceux-ci dans l'image.

**Revendications**

1. Procédé de visualisation par un opérateur, d'une image multispectrale (10) formée de plusieurs images spectrales (11, 12, 13,...) d'une même scène qui ont été saisies à un même instant respectivement dans des intervalles spectraux séparés, le procédé comprenant les étapes successives suivantes :

/1/ définir une opération de combinaison entre deux valeurs d'intensité, pour produire une nouvelle valeur d'intensité résultant de la combinaison ;

/2/ sur un écran comprenant une matrice (1) de pixels (2) présentée à l'opérateur, afficher une représentation de la scène constituée de valeurs d'intensité initiales qui sont attribuées respectivement à tous les pixels de la matrice, et qui sont obtenues à partir d'au moins une des images spectrales (11, 12, 13,...) ;

/3/ pour une première fenêtre (F1) plus petite que la matrice (1), et pour une sélection de plusieurs des images spectrales (11, 12, 13,...), déterminer une projection de Fisher à partir des valeurs d'intensités initiales des images spectrales sélectionnées, ladite projection de Fisher étant déterminée pour optimiser un contraste d'une combinaison linéaire des images spectrales de la sélection à l'intérieur de la première fenêtre ;

/4/ pour chaque pixel (2) à l'intérieur de la première fenêtre (F1), calculer une valeur d'intensité intermédiaire en exécutant les sous-étapes suivantes :

/4-1/ appliquer la projection de Fisher déterminée à l'étape /3/ aux portions des images spectrales (11, 12, 13,...) sélectionnées qui sont comprises dans la première fenêtre (F1), de façon à obtenir une valeur brute de projection pour chaque pixel (2) de ladite première fenêtre (F1) ; puis

/4-2/ convertir les valeurs brutes de projection obtenues à la sous-étape /4-1/ en utilisant une fonction de conversion monotone, de sorte qu'une plus petite et qu'une plus grande parmi les dites valeurs brutes de projection soient égales respectivement à une borne inférieure et à une borne supérieure d'un intervalle fixé ;

/4-3/ calculer un contraste à l'intérieur de la première fenêtre (F1), des valeurs brutes obtenues à la sous-étape /4-1/ ; puis

/4-4/ pour chaque pixel (2) à l'intérieur de ladite première fenêtre (F1), calculer la valeur d'intensité intermédiaire en multipliant la valeur brute convertie obtenue à la sous-étape /4-2/ pour ledit pixel, par le contraste obtenu à la sous-étape /4-3/ ;

/5/ mettre à jour la représentation de la scène qui est affichée sur l'écran en remplaçant, pour certains au moins des pixels (2) contenus dans la première fenêtre (F1), la valeur d'intensité initiale par la valeur d'intensité intermédiaire calculée à l'étape /4/ ;

/6/ répéter les étapes /3/ et /4/ pour une seconde fenêtre (F2) plus petite que la matrice (1), différente de la première fenêtre (F1) et ayant des pixels (2) communs avec ladite première fenêtre, et pour la même sélection des images spectrales (11, 12, 13,...) ; et

/7/ mettre de nouveau à jour la représentation de la scène qui est affichée sur l'écran, de la façon suivante à partir de la représentation obtenue à l'issue de l'étape /5/ :

/7-1/ pour certains au moins des pixels (2) à l'intérieur de la seconde fenêtre (F2) mais n'appartenant à aucune fenêtre sélectionnée antérieurement : remplacer la valeur d'intensité initiale par la valeur d'intensité intermédiaire calculée à l'étape /6/ ;

/7-2/ pour certains au moins des pixels (2) à l'intérieur de la seconde fenêtre (F2) mais qui appartiennent en outre à au moins une fenêtre sélectionnée antérieurement : remplacer la valeur d'intensité initiale ou intermédiaire qui a été utilisée à l'étape /5/ pour mettre à jour la représentation de la scène par la nouvelle valeur d'intensité qui résulte de l'opération de combinaison appliquée à ladite valeur d'intensité initiale ou intermédiaire utilisée à l'étape /5/ et à la valeur d'intensité intermédiaire calculée à l'étape /6/ ; et

/7-3/ pour chaque pixel (2) à l'extérieur de la seconde fenêtre (F2) : conserver la valeur d'intensité initiale ou intermédiaire qui a été utilisée à l'étape /5/ pour mettre à jour la représentation de la scène,

l'opération de combinaison des valeurs d'intensité étant définie à l'étape /1/ de sorte que la représentation de la scène qui est obtenue à l'étape /7/ contienne une trace de la représentation de ladite scène telle que résultant de l'exécution antérieure de l'étape /5/, y compris une visibilité de la position de la première fenêtre (F1) et d'éléments d'image révélés dans ladite première fenêtre.

**2.** Procédé selon la revendication 1, suivant lequel l'opération de combinaison est définie à l'étape /1/ de sorte que la nouvelle valeur d'intensité soit égale à la plus grande des deux valeurs d'intensité qui sont combinées.

**3.** Procédé selon la revendication 1 ou 2, suivant lequel chaque image spectrale qui est utilisée à l'étape /2/ pour obtenir les valeurs d'intensité initiales, correspond à un intervalle spectral contenu dans un domaine de sensibilité d'un oeil humain.

**4.** Procédé selon la revendication 3, suivant lequel plusieurs images spectrales sont utilisées à l'étape /2/, de sorte que la représentation de la scène qui est affichée à l'étape /2/ corresponde à une vision en couleurs de l'oeil humain dans des conditions de jour.

**5.** Procédé selon l'une quelconque des revendications précédentes, comprenant en outre plusieurs répétitions successives de la séquence des étapes /6/ et /7/ avec des fenêtres (F3, F4, F5,...) variables entre deux répétitions successives, l'étape /6/ étant répétée à chaque fois à partir des mêmes images spectrales (11, 12, 13,...) sélectionnées, et la représentation de la scène étant mise à jour à l'étape /7/ de chaque répétition en cours à partir de la représentation de la scène telle qu'obtenue à l'issue de l'étape /7/ exécutée lors de la répétition précédente, et en utilisant les valeurs d'intensité intermédiaires de l'étape /6/ de ladite répétition en cours.

**6.** Procédé selon la revendication 5, suivant lequel les fenêtres qui sont utilisées pour les répétitions successives de la séquence des étapes /6/ et /7/ sont chacune déterminées par l'opérateur qui regarde l'écran.

**7.** Procédé selon la revendication 5, suivant lequel certaines au moins des fenêtres qui sont utilisées pour les répétitions successives de la séquence des étapes /6/ et /7/ sont sélectionnées automatiquement de part et d'autre d'un trajet de déplacement (C) à l'intérieur de la matrice (1), déterminé par l'opérateur qui regarde l'écran.

**8.** Procédé selon la revendication 5, suivant lequel certaines des fenêtres qui sont utilisées pour les répétitions successives de la séquence des étapes /6/ et /7/ sont déterminées par l'opérateur, et pour chaque fenêtre déterminée par l'opérateur, la séquence des étapes /6/ et /7/ est en outre répétée pour huit fenêtres additionnelles disposées dans la matrice de sorte que des zones de cible situées respectivement à l'intérieur des dites huit fenêtres additionnelles soient contigües par un côté ou par un angle avec une zone de cible dans ladite fenêtre déterminée par l'opérateur.

**9.** Procédé selon la revendication 5, suivant lequel certaines des fenêtres qui sont utilisées pour les répétitions successives de la séquence des étapes /6/ et /7/ sont déterminées par l'opérateur, et pour chaque fenêtre déterminée par l'opérateur, la séquence des étapes /6/ et /7/ est en outre répétée pour quatre fenêtres additionnelles alignées avec ladite fenêtre déterminée par l'opérateur selon une direction de colonne de la matrice, de façon à former une pile de fenêtres réparties symétriquement de part et d'autre de ladite fenêtre déterminée par l'opérateur, et de sorte que des zones de cible situées respectivement à l'intérieur des dites fenêtres de la pile soient contigües deux à deux.

**10.** Procédé selon l'une quelconque des revendications 5 à 9, suivant lequel une partie des pixels dans la fenêtre qui est utilisée pour la répétition en cours de la séquence des étapes /6/ et /7/, est marquée en réponse à une première commande saisie par l'opérateur.

**11.** Procédé selon la revendication 10, suivant lequel les pixels qui sont marqués en réponse à la première commande, sont affichés avec une couleur prédéterminée.

**12.** Procédé selon la revendication 10 ou 11, suivant lequel les pixels qui sont marqués en réponse à la première commande, sont ceux des pixels contenus dans la fenêtre qui est utilisée pour la répétition en cours de la séquence des étapes /6/ et /7/, qui ont des valeurs d'intensité supérieures à un premier seuil dans la représentation de la scène telle que mise à jour à l'issue de ladite répétition en cours de la séquence des étapes /6/ et /7/.

**13.** Procédé selon l'une quelconque des revendications 5 à 12, suivant lequel la représentation de la scène affichée à l'étape /2/, avec les valeurs d'intensité initiales, est de nouveau affichée en réponse à une seconde commande saisie par l'opérateur, puis le procédé de visualisation est repris à partir de l'étape /3/.

**14.** Procédé selon la revendication 13 et l'une quelconque des revendications 10 à 12, suivant lequel la représentation de la scène affichée à l'étape /2/ est de nouveau affichée et le procédé de visualisation est repris à partir de l'étape /3/ après la seconde commande, tout en conservant un marquage de pixels effectué antérieurement en réponse à la première commande.

**15.** Procédé selon l'une quelconque des revendications précédentes, suivant lequel, à l'étape /5/ et à la sous-étape /7-1/, la valeur d'intensité initiale est remplacée par la valeur d'intensité intermédiaire si ladite valeur d'intensité intermédiaire est supérieure à un second seuil adopté pour la fenêtre en cours, sinon la valeur d'intensité initiale est maintenue mais en étant affectée par un niveau de transparence qui est déterminé en fonction de ladite valeur d'intensité intermédiaire ; et
à la sous-étape /7-2/, la nouvelle valeur d'intensité résultant de la combinaison est utilisée pour le remplacement si ladite nouvelle valeur d'intensité est supérieure au second seuil, sinon la valeur d'intensité qui résulte de la répétition précédente de la séquence des étapes /6/ et /7/ est maintenue mais en étant affectée par un niveau de transparence qui est déterminé en fonction de ladite nouvelle valeur d'intensité.

**16.** Procédé selon la revendication 15, suivant lequel le second seuil est déterminé à partir d'une évaluation statistique des valeurs d'intensité intermédiaires pour les pixels appartenant à une zone de fond dans la fenêtre qui est utilisée pour la répétition en cours de la séquence des étapes /6/ et /7/.

**17.** Dispositif de visualisation d'une image multispectrale (10) formée de plusieurs images spectrales (11, 12, 13,...) d'une même scène, qui sont associées à des intervalles spectraux séparés, le dispositif comprenant :

- des moyens de stockage de l'image multispectrale ;
- un écran comprenant une matrice (1) de pixels (2) ;
- un système de traitement d'image, adapté pour combiner entre elles des valeurs d'intensité attribuées aux pixels (2) dans chaque image spectrale (11, 12, 13,...) ;
- un système de contrôle adapté pour afficher sur l'écran une représentation de la scène produite par le système de traitement d'image ; et
- un système de sélection d'une fenêtre (F1, F2, F3,...) dans la matrice (1), ladite fenêtre étant plus petite que ladite matrice,

le dispositif étant adapté pour mettre en oeuvre un procédé de visualisation qui est conforme à l'une quelconque des revendications 1 à 16.

**18.** Produit programme d'ordinateur, comprenant des instructions de programme stockées sur un support lisible par un ou plusieurs processeurs, et adaptées pour faire exécuter audit un ou plusieurs processeurs un procédé de visualisation qui est conforme à l'une quelconque des revendications 1 à 16.

**Patentansprüche**

**1.** Verfahren zur Sichtbarmachung eines Multispektralbildes (10), das von mehreren Spektralbildern (11, 12, 13, ...) einer selben Szene gebildet ist, die zu einem selben Zeitpunkt jeweils in getrennten Spektralintervallen erfasst wurden, durch einen Bediener, wobei das Verfahren die folgende Abfolge von Schritten umfasst:

/1/ Definieren eines Kombinationsvorgangs zwischen zwei Intensitätswerten, um einen neuen Intensitätswert zu erzeugen, der sich aus der Kombination ergibt;

/2/ auf einem Bildschirm, umfassend eine Matrix (1) von Pixel (2), die dem Bediener präsentiert wird, Anzeigen einer Darstellung der Szene, die von anfänglichen Intensitätswerten gebildet ist, die jeweils allen Pixeln der Matrix zugeordnet sind und die aus mindestens einem der Spektralbilder (11, 12, 13, ...) erhalten werden;

/3/ für ein erstes kleineres Fenster (F1) als die Matrix (1) und für eine Auswahl von mehreren Spektralbildern (11, 12, 13, ...) Bestimmen einer Fisher-Projektion aus anfänglichen Intensitätswerten der ausgewählten Spektralbilder, wobei die Fisher-Projektion bestimmt wird, um einen Kontrast einer linearen Kombination der Spektralbilder der Auswahl innerhalb des ersten Fensters zu optimieren;

/4/ für jedes Pixel (2) innerhalb des ersten Fensters (F1) Berechnen eines Zwischenintensitätswerts, wobei die folgenden Unterschritte ausgeführt werden:

/4-1/ Anwenden der in Schritt /3/ bestimmten Fisher-Projektion auf die ausgewählten Abschnitte der Spektralbilder (11, 12, 13, ...), die in dem ersten Fenster (F1) enthalten sind, um einen Bruttoprojektionswert für jedes Pixel (2) des ersten Fensters (F1) zu erhalten; dann

/4-2/ Umwandeln der in dem Unterschritt /4-1/ erhaltenen Bruttoprojektionswerte unter Verwendung einer monotonen Umwandlungsfunktion, so dass ein kleinerer und ein größerer unter den Bruttoprojektionswerten gleich einer unteren Grenze bzw. einer oberen Grenze eines festgelegten Intervalls sind;

/4-3/ Berechnen eines Kontrasts innerhalb des ersten Fensters (F1) der in dem Unterschritt /4-1/ erhaltenen Bruttowerte; dann

/4-4/ für jedes Pixel (2) innerhalb des ersten Fensters (F1) Berechnen des Zwischenintensitätswerts, indem der in dem Unterschritt /4-2/ für das Pixel erhaltene umgewandelte Bruttowert mit dem in dem Unterschritt /4-3/ erhaltenen Kontrast multipliziert wird;

/5/ Aktualisieren der Darstellung der Szene, die am Bildschirm angezeigt ist, indem für mindestens gewisse der in dem ersten Fenster (F1) enthaltenen Pixel (2) der anfängliche Intensitätswert durch den in Schritt /4/ berechneten Zwischenintensitätswert ersetzt wird;

/6/ Wiederholen der Schritte /3/ und /4/ für ein zweites kleineres Fenster (F2) als die Matrix (1), das sich vom

**13**

ersten Fenster (F1) unterscheidet und mit dem ersten Fenster gemeinsame Pixel (2) hat, und für dieselbe Auswahl der Spektralbilder (11, 12, 13, ...); und

/7/ erneutes Aktualisieren der Darstellung der Szene, die am Bildschirm angezeigt ist, auf folgende Weise auf Basis der nach Schritt /5/ erhaltenen Darstellung:

/7-1/ für mindestens gewisse der Pixel (2) innerhalb des zweiten Fensters (F2), allerdings keinem früher ausgewählten Fenster angehörend: Ersetzen des anfänglichen Intensitätswerts durch den in Schritt /6/ berechneten Zwischenintensitätswert;

/7-2/ für mindestens gewisse der Pixel (2) innerhalb des zweiten Fensters (F2), allerdings ferner mindestens einem früher ausgewählten Fenster angehörend: Ersetzen des anfänglichen Intensitätswerts oder Zwischenintensitätswerts, der in Schritt /5/ verwendet wurde, um die Darstellung der Szene durch den neuen Intensitätswert zu aktualisieren, der aus der Kombination stammt, die auf den anfänglichen Intensitätswert oder Zwischenintensitätswert, der in Schritt /5/ verwendet wurde, und auf den in Schritt /6/ berechneten Zwischenintensitätswert angewandt wurde; und

/7-3/ für jedes Pixel (2) außerhalb des zweiten Fensters (F2): Bewahren des anfänglichen Intensitätswerts oder Zwischenintensitätswerts, der in Schritt /5/ verwendet wurde, um die Darstellung der Szene zu aktualisieren,

wobei der Kombinationsvorgang der Intensitätswerte in Schritt /1/ definiert wird, so dass die Darstellung der Szene, die in Schritt /7/ erhalten wird, eine Spur der Darstellung der Szene enthält, wie sie aus der früheren Ausführung des Schritts /5/ hervorgeht, inklusive einer Sichtbarkeit der Position des ersten Fensters (F1) und von in dem ersten Fenster aufgezeigten Bildelementen.

2.  Verfahren nach Anspruch 1, bei dem der Kombinationsvorgang in Schritt /1/ definiert wird, so dass der neue Intensitätswert gleich dem größeren der zwei Intensitätswerte, die kombiniert werden, ist.

3.  Verfahren nach Anspruch 1 oder 2, bei dem jedes Spektralbild, das in Schritt /2/ verwendet wird, um die anfänglichen Intensitätswerte zu erhalten, einem in einem Sensibilitätsbereich des menschlichen Auges enthaltenen Spektralintervall entspricht.

4.  Verfahren nach Anspruch 3, bei dem mehrere Spektralbilder in Schritt /2/ verwendet werden, so dass die Darstellung der Szene, die in Schritt /2/ angezeigt ist, einem Farbsehen des menschlichen Auges bei Tagesbedingungen entspricht.

5.  Verfahren nach einem der vorhergehenden Ansprüche, ferner umfassend mehrere aufeinanderfolgende Wiederholungen der Sequenz der Schritte /6/ und /7/ mit variablen Fenstern (F3, F4, F5, ...) zwischen zwei aufeinanderfolgenden Wiederholungen, wobei der Schritt /6/ immer von denselben ausgewählten Spektralbildern (11, 12, 13, ...) wiederholt wird, und die Darstellung der Szene in Schritt /7/ jeder laufenden Wiederholung von der Darstellung der Szene, wie nach dem bei der vorherigen Wiederholung ausgeführten Schritt /7/ erhalten, aktualisiert wird, und wobei die Zwischenintensitätswerte des Schritts /6/ der laufenden Wiederholung verwendet werden.

6.  Verfahren nach Anspruch 5, bei dem die Fenster, die für die aufeinanderfolgenden Wiederholungen der Sequenz der Schritte /6/ und /7/ verwendet werden, jeweils vom Bediener, der den Bildschirm betrachtet, bestimmt werden.

7.  Verfahren nach Anspruch 5, bei dem mindestens gewisse der Fenster, die für die aufeinanderfolgenden Wiederholungen der Sequenz der Schritte /6/ und /7/ verwendet werden, automatisch beiderseits einer Bewegungsbahn (C) innerhalb der Matrix (1) ausgewählt werden, die vom Bediener, der den Bildschirm betrachtet, bestimmt wird.

8.  Verfahren nach Anspruch 5, bei dem gewisse der Fenster, die für die aufeinanderfolgenden Wiederholungen der Sequenz der Schritte /6/ und /7/ verwendet werden, vom Bediener bestimmt werden, und für jedes vom Bediener bestimmte Fenster die Sequenz der Schritte /6/ und /7/ ferner für acht zusätzliche Fenster, die in der Matrix angeordnet sind, wiederholt wird, so dass Zielzonen, die sich jeweils innerhalb der acht zusätzlichen Fenster befinden, mit einer Seite oder einem Winkel an eine Zielzone in dem vom Bediener bestimmten Fenster angrenzen.

9.  Verfahren nach Anspruch 5, bei dem gewisse der Fenster, die für die aufeinanderfolgenden Wiederholungen der Sequenz der Schritte /6/ und /7/ verwendet werden, vom Bediener bestimmt werden, und für jedes vom Bediener bestimmte Fenster die Sequenz der Schritte /6/ und /7/ ferner für vier zusätzliche Fenster, die mit dem vom Bediener bestimmten Fenster in einer Spaltenrichtung der Matrix ausgerichtet sind, wiederholt wird, so dass ein Stapel von Fenstern, die symmetrisch beiderseits des vom Bediener bestimmten Fensters verteilt sind, gebildet wird, und Zielzonen, die sich jeweils innerhalb der Fenster des Stapels befinden, zwei und zwei aneinandergrenzen.

10. Verfahren nach einem der Ansprüche 5 bis 9, bei dem ein Teil der Pixel in dem Fenster, das für die laufende Wiederholung der Sequenz der Schritte /6/ und /7/ verwendet wird, als Antwort auf eine erste vom Bediener eingegebene Steuerung markiert wird.

11. Verfahren nach Anspruch 10, bei dem die Pixel, die als Antwort auf die erste Steuerung markiert sind, mit einer vorbestimmten Farbe angezeigt werden.

12. Verfahren nach Anspruch 10 oder 11, bei dem die Pixel, die als Antwort auf die erste Steuerung markiert sind, jene der in dem Fenster, das für die laufende Wiederholung der Sequenz der Schritte /6/ und /7/ verwendet wird, enthaltenen Pixel sind, die Intensitätswerte größer als eine erste Schwelle in der Darstellung der Szene, wie nach der laufenden Wiederholung der Sequenz der Schritte /6/ und /7/ aktualisiert, haben.

13. Verfahren nach einem der Ansprüche 5 bis 12, bei dem die Darstellung der in Schritt /2/ angezeigten Szene mit den anfänglichen Intensitätswerten als Antwort auf eine zweite vom Bediener eingegebene Steuerung erneut angezeigt wird, dann das Verfahren der Sichtbarmachung ab dem Schritt /3/ wieder aufgenommen wird.

14. Verfahren nach Anspruch 13 und einem der Ansprüche 10 bis 12, bei dem die Darstellung der Szene, die in Schritt /2/ angezeigt ist, erneut angezeigt wird, und das Verfahren der Sichtbarmachung ab dem Schritt /3/ nach der zweiten Steuerung wieder aufgenommen wird, wobei eine Markierung von Pixeln, die früher als Antwort auf die erste Steuerung durchgeführt wurde, beibehalten wird.

15. Verfahren nach einem der vorhergehenden Ansprüche, bei dem in Schritt /5/ und in dem Unterschritt /7-1/ der anfängliche Intensitätswert durch den Zwischenintensitätswert ersetzt wird, wenn der Zwischenintensitätswert größer als eine zweite Schwelle ist, die für das laufende Fenster angenommen wurde, andernfalls der anfängliche Intensitätswert beibehalten, allerdings mit einem Transparenzniveau belegt wird, das in Abhängigkeit von dem Zwischenintensitätswert bestimmt wird; und in Unterschritt /7-2/ der neue aus der Kombination stammende Intensitätswert für den Ersatz verwendet wird, wenn der neue Intensitätswert größer als die zweite Schwelle ist, andernfalls der Intensitätswert, der aus der vorhergehenden Wiederholung der Sequenz der Schritte /6/ und /7/ stammt, beibehalten, allerdings mit einem Transparenzniveau belegt wird, das in Abhängigkeit von dem neuen Intensitätswert bestimmt wird.

16. Verfahren nach Anspruch 15, bei dem die zweite Schwelle auf Basis einer statistischen Bewertung der Zwischenintensitätswerte für die einer Bodenzone in dem Fenster angehörenden Pixel bestimmt wird, die für die laufende Wiederholung der Sequenz der Schritte /6/ und /7/ verwendet wird.

17. Vorrichtung zur Sichtbarmachung eines Multispektralbildes (10), das von mehreren Spektralbildern (11, 12, 13, ...) einer selben Szene, gebildet ist, die getrennten Spektralintervallen zugeordnet sind, wobei die Vorrichtung umfasst:

- Mittel zur Speicherung des Multispektralbildes;
- einen Bildschirm, umfassend eine Matrix (1) von Pixeln (2);
- ein Bildbearbeitungssystem, das geeignet ist, Intensitätswerte, die den Pixeln (2) in jedem Spektralbild (11, 12, 13, ...) zugeordnet sind, miteinander zu kombinieren;
- ein Steuersystem, das geeignet ist, am Bildschirm eine Darstellung der von dem Bildbearbeitungssystem erzeugten Szene anzuzeigen; und
- ein System zur Auswahl eines Fensters (F1, F2, F3, ...) in der Matrix (1), wobei das Fenster kleiner als die Matrix ist,

wobei die Vorrichtung geeignet ist, ein Verfahren zur Sichtbarmachung nach einem der Ansprüche 1 bis 16 umzusetzen.

18. Computerprogrammprodukt, umfassend Programmbefehle, die auf einem von einem oder mehreren Prozessoren lesbaren Träger gespeichert und geeignet sind, den einen oder die mehreren Prozessoren ein Verfahren zur Sichtbarmachung nach einem der Ansprüche 1 bis 16 ausführen zu lassen.

**Claims**

1. Method for viewing, by an operator, a multispectral image (10) formed of a plurality of spectral images (11, 12, 13, ...) of one and same scene that were captured at one and same moment in separate respective spectral ranges, the method comprising the following successive steps:

   /1/ defining a combination operation for combining two intensity values, to produce a new intensity value resulting from the combination;

   /2/ on a screen comprising a matrix (1) of pixels (2) presented to the operator, displaying a representation of the scene consisting of initial intensity values which are respectively assigned to all the pixels of the matrix, and which are obtained from at least one of the spectral images (11, 12, 13, ...);

   /3/ for a first window (F1) which is smaller than the matrix (1), and for a selection of several of the spectral images (11, 12, 13, ...), determining a Fisher projection from the initial intensity values of the selected spectral images, said Fisher projection being determined in order to optimize a contrast of a linear combination of the spectral images of the selection within the first window;

   /4/ for each pixel (2) within the first window (F1), calculating an intermediate intensity value by performing the following sub-steps:

      /4-1/ applying the Fisher projection determined in step /3/ to the portions of the selected spectral images (11, 12, 13, ...) which are contained in the first window (F1), so as to obtain a raw projection value for each pixel (2) of said first window (F1); then

      /4-2/ converting the raw projection values obtained in sub-step /4-1/, by using a monotonic conversion function, such that a smallest and largest value among said raw projection values are respectively equal to a lower bound and an upper bound of a fixed interval;

      /4-3/ calculating a contrast within the first window (F1), for the raw values obtained in sub-step /4-1/; then

      /4-4/ for each pixel (2) within said first window (F1), calculating the intermediate intensity value by multiplying the converted raw value obtained in sub-step /4-2/ for said pixel, by the contrast obtained in sub-step /4-3/;

   /5/ updating the representation of the scene that is displayed on the screen by replacing, for at least some of the pixels (2) contained in the first window (F1), the initial intensity value by the intermediate intensity value calculated in step /4/;

   /6/ repeating steps /3/ and /4/ for a second window (F2) which is smaller than the matrix (1), different from the first window (F1) and having pixels (2) in common therewith, and for the same selection of spectral images (11, 12, 13, ...); and

   /7/ once again updating the representation of the scene which is displayed on the screen, in the following manner, based on the representation as obtained from step /5/:

      /7-1/ for at least some of the pixels (2) within the second window (F2) but not part of any previously selected window: replacing the initial intensity value by the intermediate intensity value calculated in step /6/;

      /7-2/ for at least some of the pixels (2) within the second window (F2) but which are also part of at least one previously selected window: replacing the initial or intermediate intensity value which has been used in step /5/ for updating the representation of the scene, by the new intensity value resulting from the combination operation applied to said initial or intermediate intensity value used in step /5/ and to the intermediate intensity value calculated in step /6/; and

      /7-3/ for each pixel (2) outside the second window (F2): maintaining the initial or intermediate intensity value which has been used in step /5/ for updating the representation of the scene,

   the combination operation for the intensity values being defined in step /1/ so that the representation of the scene which is obtained in step /7/ contains a trace of the representation of said scene as resulting from the prior execution of step /5/, including a visibility of the position of the first window (F1) and of image elements revealed in said first window.

2. Method according to claim 1, wherein the combination operation is defined in step /1/ such that the new intensity value is equal to the largest one of the two intensity values which are combined.

3. Method according to claim 1 or 2, wherein each spectral image which is used in step /2/ to obtain the initial intensity values, corresponds to a spectral range which is contained within a range of sensitivity of a human eye.

**4.** Method according to claim 3, wherein a plurality of spectral images are used in step /2/, such that the representation of the scene which is displayed in step /2/ corresponds to color vision of the human eye in daylight conditions.

**5.** Method according to any one of the preceding claims, further comprising a plurality of successive repetitions of the sequence of steps /6/ and /7/, with windows (F3, F4, F5, ...) that change between two successive repetitions, step /6/ being repeated each time using the same spectral images (11, 12, 13, ...) selected, and the representation of the scene being updated in step /7/ of each current repetition based on the representation of the scene as obtained from step /7/ executed during the previous repetition, and using the intermediate intensity values of step /6/ of said current repetition.

**6.** Method according to claim 5, wherein the windows that are used for the successive repetitions of the sequence of steps /6/ and /7/ are each determined by the operator who is viewing at the screen.

**7.** Method according to claim 5, wherein at least some of the windows that are used for the successive repetitions of the sequence of steps /6/ and /7/ are automatically selected on each side of a path of travel (C) within the matrix (1), determined by the operator who is viewing at the screen.

**8.** Method according to claim 5, wherein some of the windows that are used for the successive repetitions of the sequence of steps /6/ and /7/ are determined by the operator, and for each window determined by the operator, the sequence of steps /6/ and /7/ is also repeated for eight additional windows arranged in the matrix such that target areas respectively located within said eight additional windows have a side or corner that is contiguous with a target area in said window determined by the operator.

**9.** Method according to claim 5, wherein some of the windows that are used for the successive repetitions of the sequence of steps /6/ and /7/ are determined by the operator, and for each window determined by the operator, the sequence of steps /6/ and /7/ is also repeated for four additional windows aligned with said window determined by the operator along a column direction of the matrix, so as to form a stack of contiguous windows distributed symmetrically on either side of said window determined by the operator, and such that the target areas respectively located within said windows of the stack form contiguous pairs.

**10.** Method according to any one of claims 5 to 9, wherein a portion of the pixels in the window being used for the current repetition of the sequence of steps /6/ and /7/ is marked in response to a first command entered by the operator.

**11.** Method according to claim 10, wherein the pixels that are marked in response to the first command are displayed with a predetermined color.

**12.** Method according to claim 10 or 11, wherein the pixels that are marked in response to the first command are the pixels, contained in the window being used for the current repetition of the sequence of steps /6/ and /7/, which have intensity values greater than a first threshold in the representation of the scene as updated at the end of said current repetition of the sequence of steps /6/ and /7/.

**13.** Method according to any one of claims 5 to 12, wherein the representation of the scene displayed in step /2/, with the initial intensity values, is displayed once again in response to a second command entered by the operator, and then the viewing method is resumed starting with step /3/.

**14.** Method according to claim 13 and any one of claims 10 to 12, wherein the representation of the scene displayed in step /2/ is displayed once again and the viewing method is resumed starting with step /3/ after the second command, while preserving a prior marking of pixels performed earlier in response to the first command.

**15.** Method according to any one of the preceding claims, wherein, in step /5/ and in sub-step /7-1/, the initial intensity value is replaced by the intermediate intensity value if said intermediate intensity value is greater than a second threshold adopted for the current window, otherwise the initial intensity value is maintained but is affected by a level of transparency that is determined based on said intermediate intensity value; and
in sub-step /7-2/, the new intensity value resulting from the combination is used for the replacement if said new intensity value is greater than the second threshold, otherwise the intensity value resulting from the previous repetition of the sequence of steps /6/ and /7/ is maintained but is affected by a level of transparency that is determined based on said new intensity value.

16. Method according to claim 15, wherein the second threshold is determined from a statistical evaluation of the intermediate intensity values for pixels that are part of a background area in the window which is used for the current repetition of the sequence of steps /6/ and /7/.

17. Device for viewing a multispectral image (10) formed of a plurality of spectral images (11, 12, 13, ...) of one and same scene, which are associated with separate spectral intervals, the device comprising:

- means for storing the multispectral image;
- a screen comprising a matrix (1) of pixels (2);
- an image processing system, adapted for combining intensity values assigned to the pixels (2) in each spectral image (11, 12, 13, ...);
- a control system adapted for displaying on the screen a representation of the scene produced by the image processing system; and
- a system for selecting a window (F1, F2, F3, ...) in the matrix (1), said window being smaller than said matrix,

the device being adapted for implementing a viewing method according to any one of claims 1 to 16.

18. Computer program product, comprising program instructions stored on a medium readable by one or more processors and adapted to cause said one or more processors to execute a viewing method according to any one of claims 1 to 16.

FIG. 1

FIG. 2a

FIG. 2b

FIG. 2c

FIG. 2d

FIG. 3

FIG. 4

**FIG. 5a**

| |
|---|
| AFFICHAGE DE LA REPRESENTATION INITIALE DE LA SCENE — S0 |

↓

| |
|---|
| SELECTION DE LA FENETRE F1 — S1 |

↓

| |
|---|
| DETERMINATION DE LA PROJECTION DE FISCHER POUR LA FENETRE F1 — S2 |

↓

| |
|---|
| CALCUL DES VALEURS BRUTES POUR L'INTERIEUR DE LA FENETRE F1 — S3 |

↓

| |
|---|
| CONVERSION DES VALEURS BRUTES — S4 |

↓

| |
|---|
| CALCUL DU CONTRASTE DES VALEURS BRUTES — S5 |

↓

| |
|---|
| CALCUL DES VALEURS D'INTENSITE INTERMEDIAIRES POUR LES PIXELS DE LA FENETRE F1 — S6 |

↓

| |
|---|
| MISE A JOUR DE LA REPRESENTATION DANS LA FENETRE F1 — S7 |

↓

| |
|---|
| SELECTION DE LA FENETRE F2 — S8 |

↓

| |
|---|
| CALCUL DES VALEURS D'INTENSITE INTERMEDIAIRES POUR LES PIXELS DE LA FENETRE F2 — S9 |

↓

| |
|---|
| MISE A JOUR DE LA REPRESENTATION DANS LA FENETRE F2 — S10 |

↓

| |
|---|
| MARQUAGE DE PIXELS ? — S11 |

↓

| |
|---|
| RESTAURATION DE LA REPRESENTATION INITIALE DE LA SCENE ? — S12 |

FIG. 5b

EP 3 055 832 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

*   FR 2982393

### Littérature non-brevet citée dans la description

*   **DE F. GOUDAIL et al.** Some practical issues in anomaly detection and exploitation of regions of in-terest in hyperspectral images. *Applied Optics,* vol. 45 (21), 5223-5236